# EUROPÄISCHE PATENTSCHRIFT

(11) **EP 2 539 177 B1**
(45) Veröffentlichungstag und Bekanntmachung des Hinweises auf die Patenterteilung: **20.04.2016**
(21) Anmeldenummer: 11705169.8
(22) Anmeldetag: 16.02.2011
(51) Int. Cl.: B60N 2/46, B60N 3/00, A47C 7/70

(54) **ANORDNUNG EINES EINKLAPPBAREN TISCHS**
ARRANGEMENT OF A TABLE THAT CAN BE FOLDED UP
AGENCEMENT D'UNE TABLE RABATTABLE

(30) Priorität: 23.02.2010 DE 102010009526
(43) Veröffentlichungstag der Anmeldung: 02.01.2013
(73) Patentinhaber: Johnson Controls Components GmbH & Co. KG, 67657 Kaiserslautern (DE)
(72) Erfinder: WINTER, Joachim, 67310 Hettenleidelheim (DE); KLEIN, Harald, 66909 Matzenbach (DE); WENZ, Frank, 67685 Erzenhausen (DE)
(74) Vertreter: Wilhelm, Wolfgang
(86) Internationale Anmeldenummer: PCT/EP2011/000745
(87) Internationale Veröffentlichungsnummer: WO 2011/103980

(56) Entgegenhaltungen:
- CH-A5- 684 331
- DE-A1- 10 114 837
- DE-A1- 10 230 643
- FR-A- 755 261
- US-A- 4 372 604
- US-A1- 2008 277 991

## Beschreibung

Die Erfindung bezieht sich auf eine Anordnung eines einklappbaren Tischs fürs Innenraum eines Kraftfahrzeugs, mit einer Tischplatte, die aus einer Ruheposition mit im wesentlichen vertikal ausgerichteter Tischebene in eine im Wesentlichen horizontal ausgerichtete Gebrauchsposition überführbar an einem fahrzeugbefestigbaren

Träger angeordnet ist, wobei der Träger sich in Fahrzeuglängsrichtung erstreckt und die Tischplatte mittels eines Tischplattenhalters um eine sich in Fahrzeuglängsrichtung erstreckende Schwenkachse aus ihrer vertikalen Ruheposition in eine horizontale Position schwenkbar am Träger befestigt ist und wobei die Tischplatte und/oder der Tischplattenhalter mittels einer Arretiereinrichtung in der Gebrauchsposition arretierbar sind, die eine Rasteinrichtung ist, in die bei in horizontaler Position und/oder in vertikaler Position befindlicher Tischplatte der Tischplattenhalter einrastbar ist.

Aus der DE 101 14 837 A1 und der DE 102 30 643 A1 ist eine Anordnung eines einklappbaren Tischs bekannt, der weitgehend der eingangs genannten Art entspricht.

Aus der DE 100 44 414 A1 ist eine Anordnung eines einklappbaren Tisch bekannt, der über eine Stützplatte an einem ausziehbaren Tragarm angeordnet ist. Im ausgezogenen Zustand ist der aus zwei Plattenelementen bestehende Tisch quer zur Längsrichtung des Fahrzeugs aufklappbar ist. Eine Arretiereinrichtung ist nicht vorhanden.

Aus der DE 10 2006 043 483 A1 ist eine Flugzeugsitzvorrichtung mit einem Tisch bekannt, der aus einer vertikal nach oben gerichteten Ruheposition in eine horizontale Gebrauchsposition schwenkbar an einem Mehrfachauszugarm angeordnet ist. Durch Rastmittel ist diese Anordnung in den verschiedenen Tragestellungen fixierbar.

Auch aus der CH 684 331 A5 ist ein Armlehnentisch für einen Fahrgastsitz eines Schienenfahrzeugs bekannt, dessen Tischplatte von einer Ruheposition in eine Gebrauchsposition überführbar ist.

Die US 4,372,604 offenbart einen Armlehnentisch für ein Eisenbahnabteil, dessen Tischplatte ebenfalls von einer Ruheposition in eine Gebrauchsposition überführbar ist.

Aus der FR 755.261 ist ein Armlehnentisch für einen Sessel mit einer zweiteiligen Tischplatte bekannt, welche von einer Ruheposition in eine Gebrauchsposition überführbar ist.

Aufgabe der Erfindung ist es eine Anordnung der eingangs genannten Art zu schaffen, bei der der Tisch in seiner Ruheposition platzsparend aufbewahrbar ist und einen einfachen sowie stabilen Aufbau aufweist.

Diese Aufgabe wird erfindungsgemäß dadurch gelöst, daß der Tischplattenhalter bei in horizontaler Position und in vertikaler Position befindlicher Tischplatte in oder entgegen der Fahrtrichtung in eine sich in oder entgegen der Fahrtrichtung erstreckende Rastausnehmung des Trägers einrastbar verschiebbar gelagert und gegen Verschwenken um die erste Schwenkachse gesichert ist, und daß der Tischplattenhalter (16) in Einrastrichtung in die Rastausnehmung von einer vorgespannten Federkraft beaufschlagt ist.

Durch die vertikale Anordnung in der Ruheposition wird nur wenig Raum zur Unterbringung der Tischplatte benötigt.

In ihrer Gebrauchsposition erfolgt eine stabile Halterung der Tischplatte, da sie nicht nur über die Schwenkachse sondern zusätzlich noch durch die Arretiereinrichtung fixiert wird.

Durch die Beaufschlagung des Tischplattenhalters in Einrastrichtung in die Rastausnehmung erfolgt nach einem Klappen der Tischplatte in ihre waagrechte Ausrichtung ein selbsttätiges Fixieren der Tischplatte in der Gebrauchsstellung.

Eine stabile Halterung der Tischplatte auch in der Ruheposition wird dadurch erreicht, daß die Tischplatte und/oder der Tischplattenhalter mittels einer Arretiervorrichtung in der Ruheposition arretierbar ist.

Der Tischplattenhalter kann ein Lagerohr mit einer sich in Fahrzeuglängsrichtung erstreckenden Lagerbohrung aufweisen und mit der Lagerbohrung auf einer sich koaxial zur Schwenkachse erstreckenden, an dem Träger angeordneten Lagerachse schwenkbar gelagert sein.

Durch diese Ausbildung kann die Lagerachse ortsfest angeordnet sein, was zu einer Stabilisierung der sich in der Gebrauchsposition befindlichen Tischplatte führt, so daß diese auch höher belastbar ist.

In einfacher Weise kann dazu der Tischplattenhalter mit seiner Lagerbohrung verschiebbar auf der Lagerachse gelagert sein.

Umschlingt dabei eine Schraubendruckfeder die Lagerachse mit Spiel, wobei die Schraubendruckfeder mit ihrem einen Ende an dem Träger abgestützt ist und mit ihrem anderen Ende mit Vorspannung an dem Tischplattenhalter diesen in Einrastrichtung in die Rastausnehmung beaufschlagend in Anlage ist, so ist nur ein geringer Bauraum erforderlich.

Eine weitere Reduzierung des erforderlichen Bauraums ergibt sich dabei dadurch, daß der Träger rohrartig mit einer inneren Ausnehmung ausgebildet ist, wobei sich die Lagerachse koaxial durch die innere Ausnehmung erstreckt und der Tischplattenhalter mit seinem Lagerohr durch eine radiale Öffnung in die innere Ausnehmung des Trägers ragt.

Einfach aufgebaut und nur geringes Gewicht aufweisend ist es dabei, wenn der Träger als U-artiges Blechbiegeteil oder als Vierkantrohr ausgebildet ist. Unter anderem werden diese beiden Bauformen dabei im folgenden als rohrartig bezeichnet.

Ist weiterhin die Rastausnehmung ein Rastschlitz, der sich von der radialen Öffnung des Trägers ausgehend in oder entgegen der Fahrtrichtung erstreckt, so ist die Tischplatte zusätzlich gegen ein seitliches Wegkippen gesichert.

Die Tischplatte kann weiterhin um eine zu ihrer Ebene rechtwinklig sich erstreckende Tischplattendrehachse an dem Tischplattenhalter drehbar gelagert sein.

Damit ist es möglich die Tischplatte bei Beibehaltung ihrer stabilen Halterung mit einem großen Freiheitsgrad in verschiedene Positionen, insbesondere auch in eine Position in Fahrtrichtung vor dem Träger zu schwenken.

Um in der Gebrauchsposition eine große Auflagefläche der Tischplatte bei gleichzeitig nur gering erforderlichem Stauraum in der Ruheposition zu erhalten, kann die Tischplatte aus zwei Teiltischplatten bestehen, wobei eine erste Teiltischplatte an dem Tischplattenhalter angeordnet und an einer Längskante mittels eines Scharniers mit einer Längskante der zweiten Teiltischplatte verbunden ist.

Ist der Träger eine Armlehne, so führt dies in Doppelfunktion zu einem geringen Bauraumerfordernis.

Die Armlehne kann dabei an einem Fahrzeugsitz des Kraftfahrzeugs angeordnet sein.

Ist die Armlehne zwischen einem Fahrersitz und einem Beifahrersitz angeordnet, so kann die Tischplatte sowohl vom Fahrer als auch vom Beifahrer genutzt werden.

Die Armlehne kann mit ihrem in Fahrtrichtung hinteren Endbereich um eine zur Längserstreckung der Armlehne rechtwinklig sich erstreckende Armlehnenachse schwenkbar an einer Rückenlehne eines Fahrzeugsitzes angeordnet sein. Erstreckt sich eine axial unverschiebbar drehbar gelagerte Neigungsverstellwelle axial durch die Innere Ausnehmung der Armlehne, die an dem in Fahrtrichtung vorderen Ende der Armlehne nach außen ragt sowie einen Drehknauf trägt, wobei die Neigungsverstellwelle an ihrem anderen Ende mit einem Außengewinde versehen ist, das in eine Neigungsverstelleinrichtung zur Verstellung der Neigung in Fahrtrichtung der Armlehne eingreift, so kann durch manuelles Drehen an dem Drehknauf die Neigung der Armlehne verstellt werden. Dadurch kann bei Verstellung der Neigung der Rückenlehne die daran angelenkte Armlehne in eine waagrechte Ausrichtung gebracht werden, so daß auch der an der Armlehne angebrachte Tisch waagrecht ausrichtbar ist.

Dabei können sich die Lagerachse und die Neigungsverstellwelle parallel zueinander durch die innere Ausnehmung der Armlehne erstrecken.

Bauteil- und bauraumsparend ist es aber auch möglich, daß Lagerachse und Neigungsverstellwelle ein einziges Bauteil bilden das die Doppelfunktion von Lagerachse und Neigungsverstellwelle erfüllt.

Ein Ausführungsbeispiel der Erfindung ist in der Zeichnung dargestellt und wird im folgenden näher beschrieben. Es zeigen
- Figur 1: eine erste perspektivische Ansicht eines ersten Ausführungsbeispiels einer Anordnung eines einklappbaren Tischs in der Ruheposition
- Figur 2: eine zweite perspektivische Ansicht der Anordnung nach Figur 1 in der Ruheposition
- Figur 3: eine perspektivische Ansicht der Anordnung nach Figur 1 in einer Zwischenposition
- Figur 4: eine perspektivische Ansicht der Anordnung nach Figur 1 in einer Gebrauchsposition mit zugeklappter Tischplatte
- Figur 5: eine perspektivische Ansicht der Anordnung nach Figur 1 in der Gebrauchsposition mit aufgeklappter Tischplatte
- Figur 6: einen Ausschnitt einer perspektivischen Unteransicht der Anordnung nach Figur 1 in der Ruheposition
- Figur 7: eine perspektivische Ansicht eines Tischplattenhalters der Anordnung nach Figur 1
- Figur 8: eine perspektivische Ansicht der Tischplatte der Anordnung nach Figur 1
- Figur 9: eine perspektivische Ansicht einer Basisplattenanordnung der Tischplatte nach Figur 8
- Figur 10: einen vergrößerten Ausschnitt "IX" der Basisplattenanordnung nach Figur 9
- Figur 11: eine perspektivische Ansicht eines zweiten Ausführungsbeispiels einer Anordnung eines einklappbaren Tischs in einer Gebrauchsposition mit aufgeklappter Tischplatte
- Figur 12: eine perspektivische Ansicht einer Armlehne der Anordnung nach Figur 11 mit einem Tischplattenhalter
- Figur 13: eine perspektivische Ansicht der Armlehne nach Figur 12 ohne einen Tischplattenhalter.

Die dargestellte Anordnung eines einklappbaren Tischs weist einen Träger auf, der als Armlehne 1, 1' ausgebildet ist.

Vorzugsweise ist die Armlehne 1, 1' zwischen einem Fahrersitz und einem Beifahrersitz eines Kraftfahrzeugs anordenbar und erstreckt sich in Fahrzeugslängsrichtung.

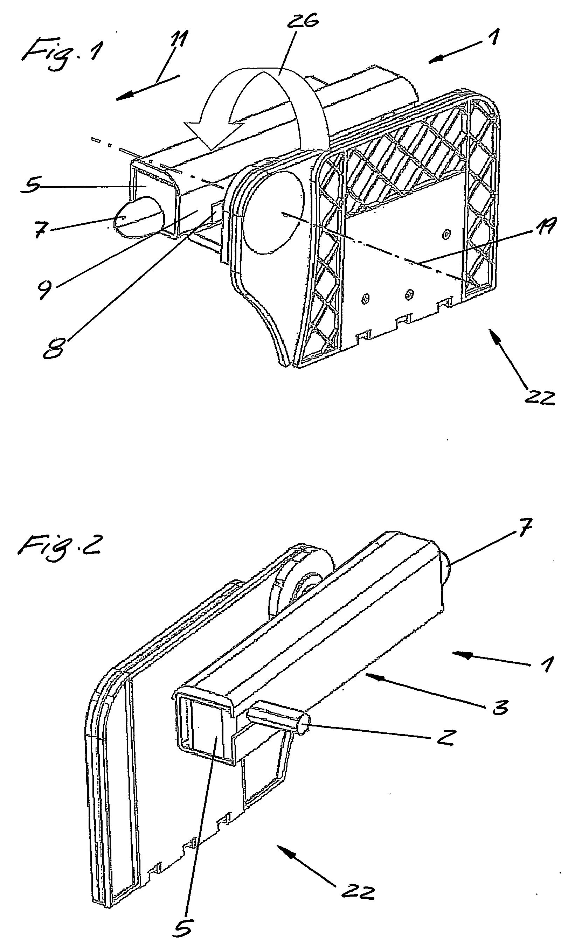

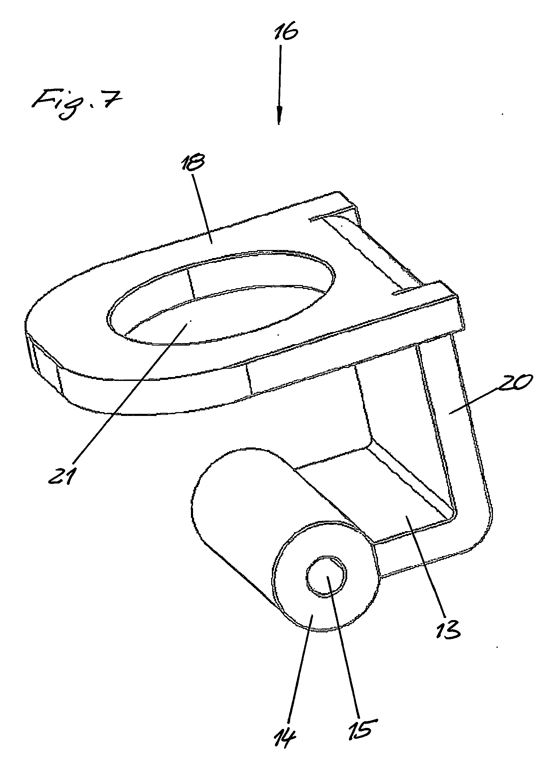

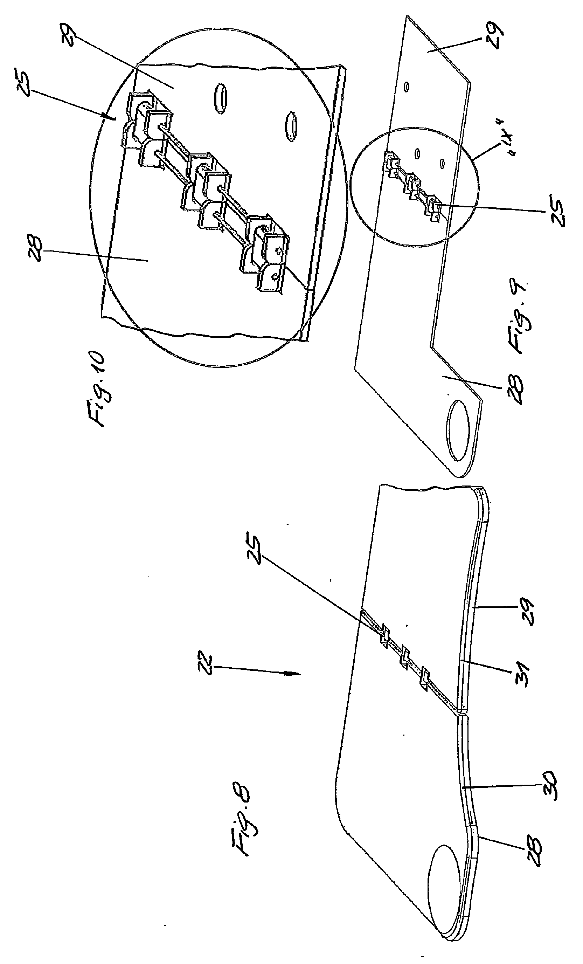

An ihrem in Fahrtrichtung 11 hinteren Endbereich weist die Armlehne 1 der Figuren 1 bis 10 einen zur Längserstreckung der Armlehne 1 rechtwinklig sich erstreckende Armlehnenachse 2 auf, mittels der die Armlehne 1 an einer nicht dargestellten Rückenlehne des Beifahrersitzes schwenkbar angeordnet ist.

Die Armlehne 1 weist ein an seiner offenen Seite durch eine Abdeckplatte 32 verschlossenes U-artiges Blechbiegeteil 3 mit einer axial durchgehenden inneren Ausnehmung 4 auf, die an ihren beiden Enden durch Verschlußstücke 5 verschlossen ist. Dabei ist das in Fahrtrichtung vordere Verschlußstück 5 durch ein umgebogenes Teil des U-artigen Blechbiegeteils 3 gebildet.

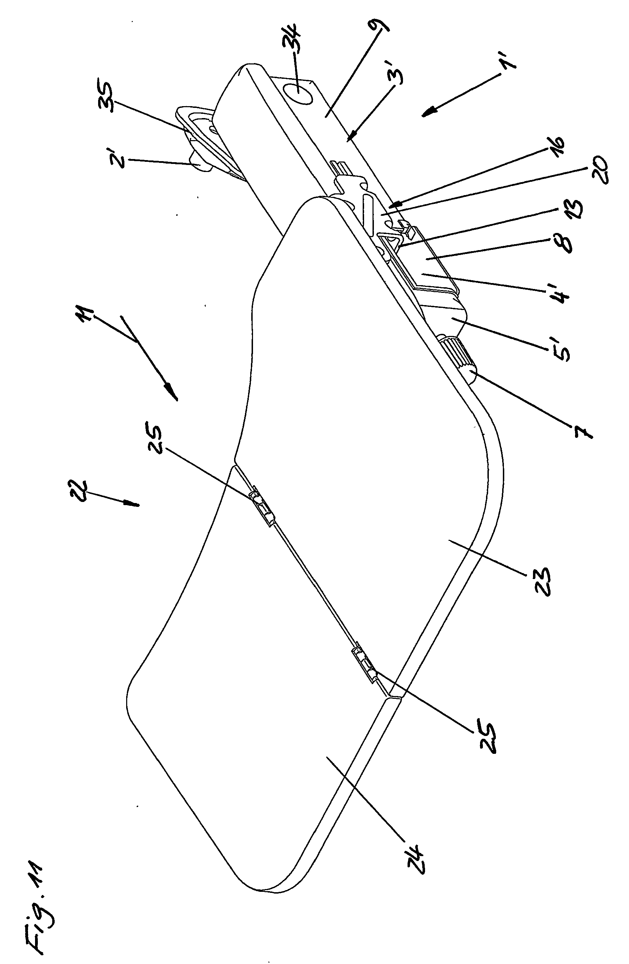

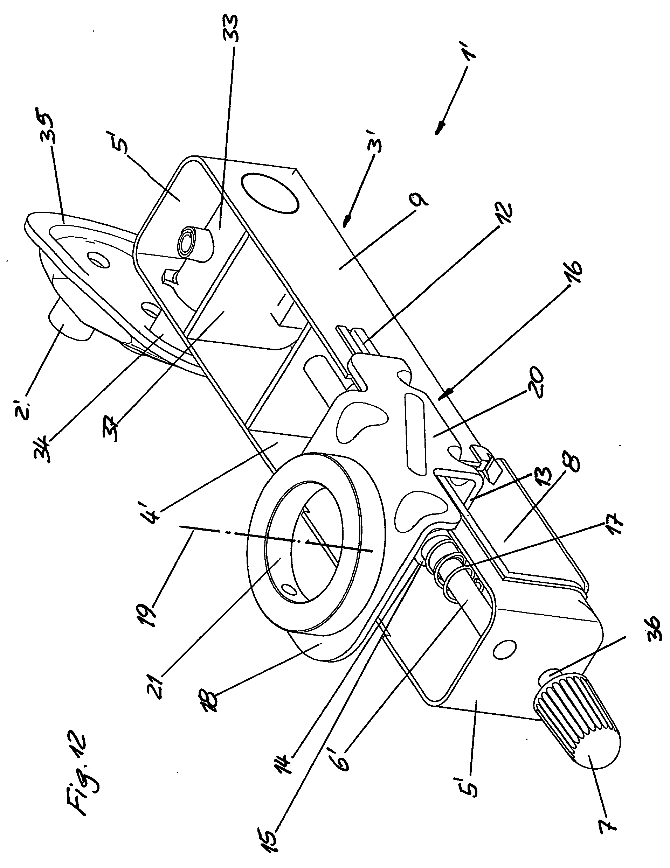

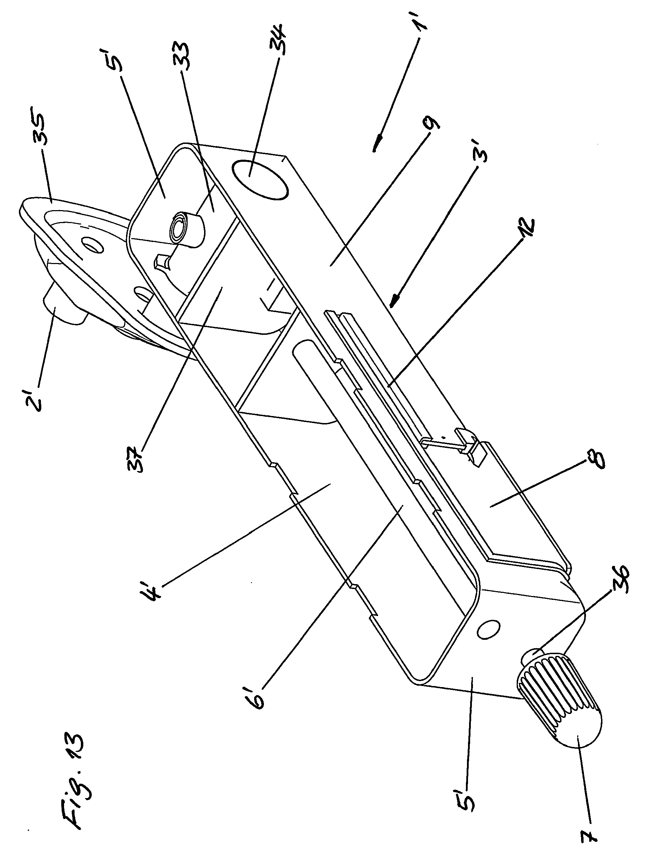

In den Figuren 11 bis 13 ist die Armlehne 1' von einem U-artigen Blechbiegeteil 3' mit einer axial durchgehenden Ausnehmung 4' gebildet, das an seinen axialen Enden durch integral ausgebildete Verschlußstücke 5' verschlossen ist.

In dem in Fahrtrichtung 11 hinteren Endbereich der Armlehne 1' ist eine Neigungsverstelleinrichtung 33 abgeordnet. Durch die Neigungsverstelleinrichtung 33 ist die Armlehne 1' um eine sich rechtwinklig zur Armlehne 1' erstreckende Neigungsverstellachse 34 in ihrer Neigung in Fahrtrichtung verstellbar.

Die Neigungsverstellachse 34 ragt aus der Armlehne 1' heraus und ist mit einer Platte 35 verbunden, die wiederum über eine zur Neigungsverstellachse 34 parallele Armlehnenachse 2' schwenkbar an einer nicht dargestellten Rückenlehne des Beifahrersitzes schwenkbar angeordnet ist.

Anstelle des U-artigen Blechbiegeteils 3 mit der Abdeckplatte 32 ist auch ein Vierkantrohr einsetzbar.

In den Figuren 1 bis 19 durchragt eine gleichzeitig eine Neigungsverstellwelle bildende Lagerachse 6 koaxial die innere Ausnehmung 4 und ist in den beiden Verschlußstücken 5 drehbar aber axial unverschiebbar gelagert.

In den Figuren 11 bis 13 durchragen eine Lagerachse 6' und eine Neigungsverstellwelle 36 parallel zueinander axial die innere Ausnehmung 4'. Dabei ist die Lagerachse 6' mit ihrem einen Ende an dem vorderen Verschlußstück 5' und mit ihrem hinteren Ende an einer Zwischenwand 36 fest angeordnet.

Die Neigungsverstellwelle 36 ist in dem vorderen Verschlußstück 5' drehbar gelagert und ragt mit ihrem mit einem Außengewinde versehenen hinteren Endbereich in die Neigungsverstelleinrichtung 33 hinein.

Die Lagerachse 6 bzw. die Neigungsverstellwelle 36 ragt an dem in Fahrtrichtung 11 vorderen Verschlußstück 5 durch eine durchgehende Lagerbohrung nach außen und trägt an diesem freien Ende einen Drehknauf 7, mittels dessen die Lagerachse 6 bzw. die Neigungsverstellwelle 36 drehbar ist.

An ihrem anderen Ende ist die Lagerachse 6 wie auch die Neigungsverstellwelle 36 mit einem Außengewinde versehen.

Durch manuelles Drehen des Drehknaufs 7 und damit der Lagerachse 6 bzw. der Neigungsverstellwelle 36 ist die in den Figuren 1 bis 10 nicht dargestellte Neigungs- und/oder Längeneinstellvorrichtung 33 bekannter Art betätigbar, wodurch insbesondere die Neigung der Armlehne 1 einstellbar ist.

Dadurch kann bei Verstellung der Neigung der Rückenlehne die daran angelenkte Armlehne 1 in eine waagrechte Ausrichtung gebracht werden, so daß auch ein an der Armlehne 1 angebrachter Tisch waagrecht ausrichtbar ist.

Bei beiden Ausführungsbeispielen ist in der einen Seitenwand 9 des U-artigen Blechbiegeteils 3 eine rechteckige radiale Öffnung 8 ausgebildet, die sich von de Seitenwand 9 bis in die Bodenwand 10 des U-artigen Blechbiegeteils 3 erstreckt.

In Fortsetzung der oberen Kante der radialen Öffnung 8 erstreckt sich entgegen der Fahrtrichtung 11 ein Rastschlitz 12 in die Seitenwand 9.

Durch die radiale Öffnung 8 ragt ein Arm 13 eines Tischplattenhalters 16, der aus einem etwa U-artig gebogenen Flachmaterial besteht.

An seinem in die innere Ausnehmung 4 des U-artigen Blechbiegeteils 3 ragenden Ende des Arms 13 ist ein Lagerohr 14 mit einer durchgehenden Lagerbohrung 15 angeordnet, mit der der Tischplattenhalter 16 auf der Lagerachse 6 schwenkbar und verschiebbar geführt angeordnet ist.

Durch die Schwenkbarkeit des Tischplattenhalters 16 ist dessen Arm 13 zwischen einer waagerecht zur Seite und einer senkrecht nach unten ragenden Position schwenkbar.

Bei in waagerechter Position befindlichem Arm 13 ist dieser durch axiales Verschieben des Tischplattenhalters 16 in den Rastschlitz 12 hineinbewegbar, wodurch der Tischplattenhalter 16 in der Gebrauchsposition gegen Verschwenken gesichert ist.

Dieses in den Rastschlitz 12 Hineinbewegen erfolgt selbsttätig und durch eine die Lagerachse 6 mit Spiel umschlingende vorgespannte Schraubendruckfeder 17, die mit ihrem einen Ende an dem in Fahrtrichtung 11 vorderen Verschlußstück 5 und mit ihrem anderen Ende an dem Lagerohr 14 des Tischplattenhalters 16 abgestützt ist.

In Fortsetzung der unteren Kante der radialen Öffnung 8 erstreckt sich entgegen der Fahrtrichtung 11 ein nicht dargestellter zweiter Rastschlitz in die Bodenwand 10. Bei in senkrechter Position befindlichem Arm 13 ist dieser durch axiales Verschieben des Tischplattenhalters 16 in den zweiten Rastschlitz hineinbewegbar, wodurch der Tischplattenhalter 16 in der Ruheposition gegen Verschwenken gesichert ist. Auch das Hineinbewegen in den zweiten Rastschlitz erfolgt durch die Schraubendruckfeder 17.

Alternativ ist es auch denkbar, den Rastschlitz 12 sowie den nicht dargestellten zweiten Rastschlitz sich in Fahrtrichtung 11 erstreckend anzuordnen. In diesem Fall ist die Schraubendruckfeder 17 derart anzuordnen, dass sie den Tischplattenhalter 16 in Fahrtrichtung drückt.

Der zum Arm 13 parallele zweite Arm 18 des Tischplattenhalters 16 weist eine zu dem den Arm 13 und den zweiten Arm 18 verbindenden Bodenteil 20 des Tischplattenhalters 16 parallel gerichtete zweite Lagerbohrung 21 auf, in der eine auf dem zweiten Arm 18 aufliegende und mit diesem verbundene Tischplatte 22 um eine Tischplattendrehachse 19 drehbar gelagert ist.

Die Tischplatte 22 besteht aus zwei Teiltischplatten 23 und 24, wobei die erste Teiltischplatte 23 an einer Längskante mittels eines Scharniers 25 mit einer Längskante der zweiten Teiltischplatte 24 derart verbunden ist, daß die zweite Teiltischplatte 24 aus einer flächig an der ersten Teiltischplatte 23 anliegenden Zusammenklapposition in eine um 90° geschwenkte Aufklapposition schwenkbar ist.

Die zweite Lagerbohrung 21 befindet sich in den Figuren 1 bis 10 in einer Ecke des dem Scharnier 25 abgewandten Bereichs der ersten Teiltischplatte 23.

In den Figuren 11 bis 13 befindet sich die nicht dargestellte zweite Lagerbohrung im mittleren Randbereich der ersten Teiltischplatte 23.

Die beiden Teiltischplatten 23 und 24 bestehen aus Basisplatten 28 und 29 aus Metall, die durch das Scharnier 25 miteinander verbunden sind.

Zu der in der Gebrauchsposition nach oben gerichteten Seite sind die Basisplatten 28 und 29 durch Deckplatten 30 und 31 aus einem Kunststoff belegt.

In der in Figur 1 dargestellten Ruheposition der Anordnung ist die Tischplatte 22 zusammengeklappt und befindet sich in einer vertikalen Ausrichtung parallel zur Armlehne 1.

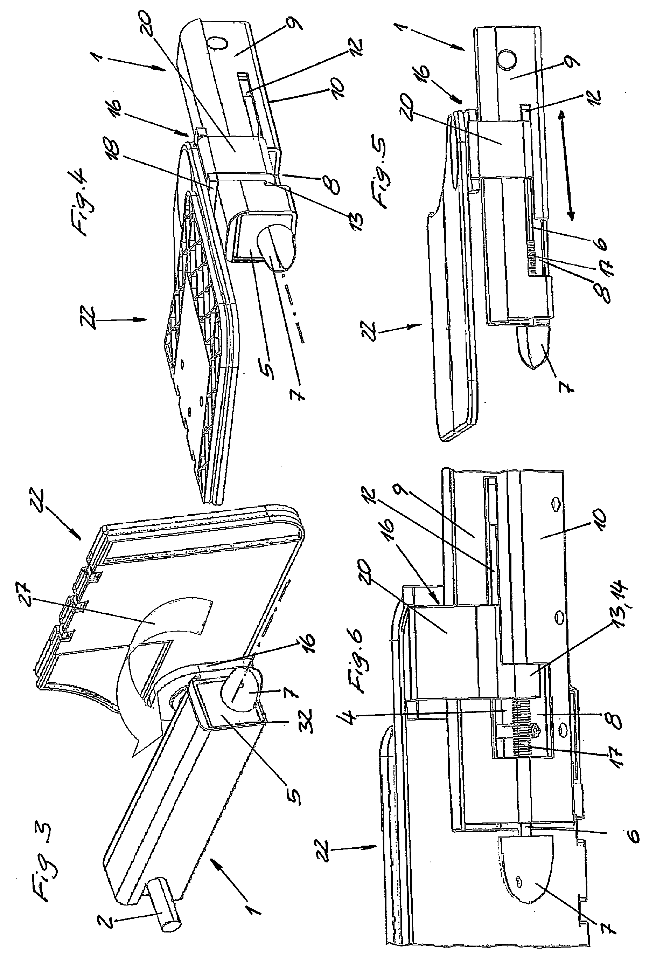

Zum Überführen in die Gebrauchsposition wird die Tischplatte 22 zunächst entsprechend dem Pfeil 26 in Figur 1 um die Achse der zweiten Lagerbohrung 21 in die in Figur 3 dargestellte Position nach vorne geschwenkt.

Anschließend erfolgt ein Verschwenken entsprechend dem Pfeil 27 in Figur 3 um die Lagerachse 6, bis die Tischplatte 22 sich in einer horizontalen Ausrichtung ihrer Tischebene befindet (Figuren 4 und 6).

Durch die Kraft der Schraubendruckfeder 17 wird nun der Tischplattenhalter 16 mit seinem Arm 13 in den Rastschlitz 12 bewegt (Figur 5).

Nun müssen nur noch die beiden Teiltischplatten 23 und 24 aufgeklappt werden und die Anordnung befindet sich in ihrer Gebrauchsposition (Figur 11).

### Bezugszeichenliste

- 1: Armlehne
- 1': Armlehne
- 2: Armlehnenachse
- 2': Armlehnenachse
- 3: U-artiges Blechbiegeteil
- 3': U-artiges Blechbiegeteil
- 4: innere Ausnehmung
- 4': innere Ausnehmung
- 5: Verschlußstücke
- 5': Verschlußstücke
- 6: Lagerachse
- 6': Lagerachse
- 7: Drehknauf
- 8: radiale Öffnung
- 9: Seitenwand
- 10: Bodenwand
- 11: Fahrtrichtung
- 12: Rastschlitz
- 13: Arm
- 14: Lagerohr
- 15: Lagerbohrung
- 16: Tischplattenhalter
- 17: Schraubendruckfeder
- 18: zweiter Arm
- 19: Tischplattendrehachse
- 20: Bodenteil
- 21: zweite Lagerbohrung
- 22: Tischplatte
- 23: erste Teiltischplatte
- 24: zweite Teiltischplatte
- 25: Scharnier
- 26: Pfeil
- 27: Pfeil
- 28: erste Basisplatte
- 29: zweite Basisplatte
- 30: erste Deckplatte
- 31: zweite Deckplatte
- 32: Abdeckplatte
- 33: Neigungsverstelleinrichtung
- 34: Neigungsverstellachse
- 35: Platte
- 36: Neigungsverstellwelle
- 37: Zwischenwand

## Patentansprüche

1. Anordnung eines einklappbaren Tischs für den Innenraum eines Kraftfahrzeugs, mit einem Träger (1, 1') und einer Tischplatte (22), die aus einer Ruheposition mit im Wesentlichen vertikal ausgerichteter Tischebene in eine im Wesentlichen horizontal ausgerichtete Gebrauchsposition überführbar an dem fahrzeugbefestigbaren Träger (1, 1') angeordnet ist, wobei der Träger (1, 1') sich in Fahrzeuglängsrichtung erstreckt und die Tischplatte (22) mittels eines Tischplattenhalters (16) um eine sich in Fahrzeuglängsrichtung erstreckende Schwenkachse aus ihrer vertikalen Ruheposition in eine horizontale Position schwenkbar am Träger (1, 1') befestigt ist und wobei die Tischplatte (22) und/oder der Tischplattenhalter (16) mittels einer Arretiereinrichtung in der Gebrauchsposition arretierbar sind, die eine Rasteinrichtung ist, in die bei in horizontaler Position und in vertikaler Position befindlicher Tischplatte (22) der Tischplattenhalter (16) einrastbar ist, **dadurch gekennzeichnet, dass** der Tischplattenhalter (16) bei in horizontaler Position und in vertikaler Position befindlicher Tischplatte (22) in oder entgegen der Fahrtrichtung in eine sich in oder entgegen der Fahrtrichtung erstreckende Rastausnehmung (12) des Trägers (1, 1') einrastbar verschiebbar gelagert und gegen Verschwenken um die erste Schwenkachse gesichert ist, und dass der Tischplattenhalter (16) in Einrastrichtung in die Rastausnehmung (12) von einer vorgespannten Federkraft beaufschlagt ist.

2. Anordnung nach Anspruch 1, **dadurch gekennzeichnet, dass** die Tischplatte und/oder der Tischplattenhalter (16) mittels einer Arretiervorrichtung in der Ruheposition arretierbar sind.

3. Anordnung nach einem der vorhergehenden Ansprüche, **dadurch gekennzeichnet, dass** der Tischplattenhalter (16) ein Lagerohr (14) mit einer sich in Fahrzeuglängsrichtung erstreckenden Lagerbohrung (15) aufweist und mit der Lagerbohrung (15) auf einer sich koaxial zur Schwenkachse erstreckenden, an dem Träger angeordneten Lagerachse (6, 6') schwenkbar gelagert ist.

4. Anordnung nach Anspruch 3, **dadurch gekennzeichnet, dass** der Tischplattenhalter (16) mit seiner Lagerbohrung (15) verschiebbar auf der Lagerachse (6, 6') gelagert ist.

5. Anordnung nach Anspruch 4, **dadurch gekennzeichnet, dass** der Träger (1, 1') rohrartig mit einer inneren Ausnehmung (4, 4') ausgebildet ist, wobei sich die Lagerachse (6, 6') axial durch die innere Ausnehmung (4, 4') erstreckt und der Tischplattenhalter (16) mit seinem Lagerohr (14) durch eine radiale Öffnung (8) in die innere Ausnehmung (4, 4') des Trägers (1, 1') ragt.

6. Anordnung nach einem der vorhergehenden Ansprüche, **dadurch gekennzeichnet, dass** die Tischplatte (22) um eine zu ihrer Ebene rechtwinklig sich erstreckende Tischplattendrehachse (19) an dem Tischplattenhalter (16) drehbar gelagert ist.

7. Anordnung nach einem der vorhergehenden Ansprüche, **dadurch gekennzeichnet, dass** die Tischplatte (22) aus zwei Teiltischplatten (23, 24) besteht, wobei eine erste Teiltischplatte (23) an dem Tischplattenhalter (16) angeordnet und an einer Längskante mittels eines Scharniers (25) mit einer Längskante der zweiten Teiltischplatte (24) verbunden ist.

8. Anordnung nach einem der vorhergehenden Ansprüche, **dadurch gekennzeichnet, dass** der Träger eine Armlehne (1, 1') ist, die mit ihrem in Fahrtrichtung hinteren Endbereich um eine zur Längserstreckung der Armlehne (1, 1') rechtwinklig sich erstreckende Armlehnenachse (2, 2') schwenkbar an einer Rückenlehne eines Fahrzeugsitzes angeordnet ist.

9. Anordnung nach Anspruch 8, **dadurch gekennzeichnet, dass** sich eine axial unverschiebbar drehbar gelagerte Neigungsverstellwelle (6, 36) axial durch die Innere Ausnehmung (4, 4') der Armlehne (1, 1') erstreckt, die an dem in Fahrtrichtung (11) vorderen Ende der Armlehne (1, 1') nach außen ragt sowie einen Drehknauf (7) trägt, wobei die Neigungsverstellwelle (6, 36) an ihrem anderen Ende mit einem Außengewinde versehen ist, das in eine Neigungsverstelleinrichtung (33) zur Verstellung der Neigung in Fahrtrichtung (11) der Armlehne (1, 1') eingreift.

10. Anordnung nach Anspruch 9, **dadurch gekennzeichnet, dass** sich die Lagerachse (6) und die Neigungsverstellwelle (36) parallel zueinander durch die innere Ausnehmung (4') der Armlehne (1') erstrecken.

11. Anordnung nach Anspruch 9, **dadurch gekennzeichnet, dass** Lagerachse (6) und Neigungsverstellwelle ein einziges Bauteil bilden.

## Claims

1. Arrangement of a collapsible table for the interior of a motor vehicle, having a carrier (1, 1') and a table top (22), which is arranged on the vehicle-mountable carrier (1, 1') such that it can be transferred from a rest position, with an essentially vertically oriented table plane, into an essentially horizontally oriented, use position, wherein the carrier (1, 1') extends in the longitudinal direction of the vehicle and the table top (22) is fastened on the carrier (1, 1') by means of a table-top holder (16) such that it can be pivoted, about a pivot axis extending in the longitudinal direction of the vehicle, out of its vertical, rest position into a horizontal position, and wherein the table top (22) and/or the table-top holder (16) can be arrested in the use position by means of an arresting device, which is a latching device into which, with the table top (22) located in the horizontal position and in the vertical position, the table-top holder (16) can be latched, **characterized in that** the table-top holder (16), with the table top (22) located in the horizontal position and in the vertical position, is mounted in a displaceable manner in or counter to the direction of travel such that it can be latched into a latching recess (12) of the carrier (1, 1'), this recess extending in or counter to the direction of travel, and is secured against pivoting about the first pivot axis, and **in that** the table-top holder (16) is biased in the latching-in direction into the latching recess (12) by a prestressed spring force.

2. Arrangement according to Claim 1, **characterized in that** the table top and/or the table-top holder (16) can be arrested in the rest position by means of an arresting mechanism.

3. Arrangement according to one of the preceding claims, **characterized in that** the table-top holder (16) has a bearing lug (14) with a bearing bore (15) extending in the longitudinal direction of the vehicle and is mounted, by way of the bearing bore (15), such that it can be pivoted on a bearing spindle (6, 6'), which extends coaxially to the pivot axis and is arranged on the carrier.

4. Arrangement according to Claim 3, **characterized in that** the table-top holder (16) is mounted, by way of its bearing bore (15), such that it can be displaced on the bearing spindle (6, 6').

5. Arrangement according to Claim 4, **characterized in that** the carrier (1, 1') is designed in the manner of a tube with an inner recess (4, 4'), wherein the bearing spindle (6, 6') extends axially through the inner recess (4, 4') and the table-top holder (16) has its bearing lug (14) projecting through a radial opening (8) into the inner recess (4, 4') of the carrier (1, 1').

6. Arrangement according to one of the preceding claims, **characterized in that** the table top (22) is mounted on the table-top holder (16) such that it can be rotated about a table-top axis of rotation (19) extending at right angles to the plane of the table top.

7. Arrangement according to one of the preceding claims, **characterized in that** the table top (22) comprises two table sub-tops (23, 24), wherein a first table sub-top (23) is arranged on the table-top holder (16) and is connected along a longitudinal edge, by means of a hinge (25), to a longitudinal edge of the second table sub-top (24).

8. Arrangement according to one of the preceding claims, **characterized in that** the carrier is an armrest (1, 1'), which has its rear end region, as seen in the direction of travel, arranged on a backrest of a vehicle seat such that it can be pivoted about an armrest spindle (2, 2') extending at right angles to the longitudinal extent of the armrest (1, 1').

9. Arrangement according to Claim 8, **characterized in that** an inclination-adjusting shaft (6, 36), which is mounted in a rotatable, but axially non-displaceable manner, extends axially through the inner recess (4, 4') of the armrest (1, 1'), projects outward at the front end of the armrest (1, 1'), as seen in the direction of travel (11), and carries a rotary knob (7), wherein the inclination-adjusting shaft (6, 36), at its other end, is provided with an external thread which engages in an inclination-adjusting device (33) for adjusting the inclination, in the direction of travel (11), of the armrest (1, 1').

10. Arrangement according to Claim 9, **characterized in that** the bearing spindle (6) and the inclination-adjusting shaft (36) extend parallel to one another through the inner recess (4') of the armrest (1').

11. Arrangement according to Claim 9, **characterized in that** the bearing spindle (6) and inclination-adjusting shaft form a single component.

## Revendications

1. Agencement d'une table rabattable pour l'espace intérieur d'un véhicule automobile, comportant un support (1, 1') et un plateau de table (22), qui est disposé sur le support (1, 1') pouvant être fixé au véhicule de manière à pouvoir passer d'une position de repos avec un plan de table orienté essentiellement verticalement à une position d'utilisation orientée essentiellement horizontalement, dans lequel le support (1, 1') s'étend dans la direction longitudinale du véhicule et le plateau de table (22) est fixé au moyen d'un support de plateau de table (16) sur le support (1, 1') de manière pivotante autour d'un axe de pivotement s'étendant dans la direction longitudinale du véhicule de sa position de repos verticale à une position horizontale et dans lequel le plateau de table (22) et/ou le support de plateau de table (16) peuvent être arrêtés dans la position d'utilisation au moyen d'un dispositif d'arrêt, qui est un dispositif d'encliquetage, dans lequel le plateau de table (22) se trouvant dans la position horizontale et dans la position verticale peut-être encliqueté dans le support de plateau de table (16), **caractérisé en ce que** le support de plateau de table (16), quand le plateau de table (22) se trouve dans la position horizontale et dans la position verticale, est positionné de manière déplaçable et encliquetable dans l'évidement d'encliquetage (12) du support (1, 1') dans la direction de conduite ou en sens contraire à la direction de conduite et est sécurisé contre un basculement autour du premier axe de pivotement, et **en ce que** le support de plateau de table (16) est sollicité dans la direction d'encliquetage dans l'évidement d'encliquetage (12) par une force de ressort précontrainte.

2. Agencement selon la revendication 1, **caractérisé en ce que** le plateau de table et/ou le support de plateau de table (16) peuvent être arrêtés dans la position de repos au moyen d'un dispositif d'arrêt.

3. Agencement selon une des revendications précédentes, **caractérisé en ce que** le support de plateau de table (16) présente un tube faisant office de palier (14) avec un alésage de palier (15) s'étendant dans la direction longitudinale du véhicule et est positionné avec l'alésage de palier (15) de manière pivotante sur un axe de palier (6, 6') disposé sur le support, s'étendant coaxialement à l'axe de pivotement.

4. Agencement selon la revendication 3, **caractérisé en ce que** le support de plateau de table (16) est positionné avec un alésage de palier (15) de manière déplaçable sur l'axe de palier (6, 6').

5. Agencement selon la revendication 4, **caractérisé en ce que** le support (1, 1') est réalisé tubulairement avec un évidement intérieur (4, 4'), dans lequel l'axe de palier (6, 6') s'étend axialement à travers l'évidement intérieur (4, 4') et le support de plateau de table (16) avec son tube faisant office de palier (14) dépasse à travers une ouverture radiale (8) dans l'évidement intérieur (4, 4') du support (1, 1').

6. Agencement selon une des revendications précédentes, **caractérisé en ce que** le plateau de table (22) est positionné sur le support de plateau de table (16) rotativement autour d'un axe de rotation de plateau de table (19) s'étendant à angle droit par rapport à son plan.

7. Agencement selon une des revendications précédentes, **caractérisé en ce que** le plateau de table (22) est constitué de deux plateaux partiels de table (23, 24), dans lequel un premier plateau partiel de table (23) est disposé sur le support de plateau de table (16) et est relié sur un premier bord longitudinal au moyen d'une charnière (25) avec un bord longitudinal du deuxième plateau partiel de table (24).

8. Agencement selon l'une quelconque des revendications précédentes, **caractérisé en ce que** le support est un accoudoir (1, 1') qui est disposé au niveau d'un dossier d'un siège de véhicule avec sa région d'extrémité arrière dans la direction de conduite de manière à pouvoir pivoter autour d'un axe d'accoudoir (2, 2') s'étendant à angle droit par rapport à l'étendue longitudinale de l'accoudoir (1, 1').

9. Agencement selon la revendication 8, **caractérisé en ce qu'**un arbre de réglage d'inclinaison (6, 36) supporté à rotation de manière non déplaçable axialement s'étend axialement à travers l'évidement intérieur (4, 4') de l'accoudoir (1, 1'), qui fait saillie vers l'extérieur à l'extrémité avant de l'accoudoir (1, 1') dans la direction de conduite (11) et porte un bouton rotatif (7), l'arbre de réglage d'inclinaison (6, 36) étant pourvu à son autre extrémité d'un filetage extérieur qui s'engage dans un dispositif de réglage d'inclinaison (33) pour le réglage de l'inclinaison dans la direction de conduite (11) de l'accoudoir (1, 1').

10. Agencement selon la revendication 9, **caractérisé en ce que** l'axe de palier (6) et l'arbre de réglage d'inclinaison (36) s'étendent parallèlement l'un à l'autre à travers l'évidement intérieur (4') de l'accoudoir (1').

11. Agencement selon la revendication 9, **caractérisé en ce que** l'axe de palier (6) et l'arbre de réglage d'inclinaison forment un composant unique.
